# EUROPEAN PATENT SPECIFICATION

(11) **EP 2 622 523 B1**
(45) Date of publication and mention of the grant of the patent: **01.06.2016**
(21) Application number: 11750056.1
(22) Date of filing: 23.08.2011
(51) Int. Cl.: F24F 11/00, F24F 1/00, F24D 3/08, F24D 19/10, F24D 17/00, G05D 23/19, F24D 3/18, F24D 17/02

(54) **HOT WATER PRIORITIZATION**
WARMWASSERPRIORITISERUNG
IDENTIFICATION DES PRIORITÉS POUR L'EAU CHAUDE

(30) Priority: 30.09.2010 US 388143 P
(43) Date of publication of application: 07.08.2013
(73) Proprietor: Carrier Corporation, Farmington, CT 06034-4015 (US)
(72) Inventor: ALESSANDRELLI, Roberto, I-MI 20161 13 Milano (IT); MONTANARI, Antonello, I-20060 Milan (IT)
(74) Representative: Taylor, Adam David
(86) International application number: PCT/US2011/048778
(87) International publication number: WO 2012/047391

(56) References cited:
- DE-A1- 4 333 270
- FR-A1- 2 465 958
- FR-A1- 2 726 351
- NL-A- 9 101 435

## Description

The disclosure relates to hot water production. More particularly, the disclosure relates to the coproduction of hot water with building climate control. In many residential heating systems, a given energy source with limited capacity is used either for domestic hot water heating or for climate control (room heating or cooling). A traditional system uses a binary control wherein energy is directed to domestic hot water heating as soon as the temperature in the hot water tank drops below a preset minimum value. The hot water heating continues until the tank reaches a preset target temperature. At that point, energy is freed for climate control.

FR 2465958 discloses a method and a system of the type defined in the preambles of claims 1 and 12 respectively.

Viewed from a first aspect, the invention provides a method for controlling a system that uses an energy source to both heat sanitary water and control temperature of a habitable space, the method comprising: determining a sanitary water priority; determining a space conditioning priority; comparing the sanitary water priority to the space conditioning priority; and directing energy from the energy source to heat the sanitary water and/or condition the space based upon the compared priorities; characterised in that when there are competing load requirements between sanitary water heating and temperature control, at least one of the sanitary water priority and space conditioning priority is non-binary.

In various implementations, the sanitary water priority may be determined based upon a difference between a sanitary water temperature setpoint and a first measured temperature. The space conditioning priority may be determined based upon a difference between a space temperature setpoint and a second measured temperature (this does not mean that the two measured temperatures are inherently different although the second measured temperature is normally expected to be much lower than the first measured temperature). The first measured temperature may be a temperature of a sanitary water storage accumulation (e.g., in a tank). The second measured temperature may comprise a measured room temperature. The sanitary water priority and the space conditioning priority may each comprise compound linear functions. For example, the sanitary water priority may comprise a first linear function from zero priority at zero difference to a first intermediate priority at a first difference. The sanitary water priority may further comprise a second linear function from the first intermediate priority at the first difference to 100% priority at a second difference. Similarly, the space conditioning priority may comprise a third linear function from zero priority at zero difference to a second intermediate priority at a third difference. The space conditioning priority may further comprise a fourth linear function from said second intermediate priority at a third difference to 100% and a fourth difference. Third and fourth linear functions may be used in a space heating mode and fifth and sixth linear functions may similarly be used in a space cooling mode. The directing may comprise operating the higher priority task at full capacity of the energy source. The directing may comprise directing output of the energy source only to the higher priority task (i.e., and none to the lower priority task). The energy source may comprise a vapor compression system and the directing may comprise operating the vapor compression system.

Viewed from a second aspect, the invention provides a system for heating sanitary water and controlling the temperature of a habitable space, the system comprising: a controller configured to: determine a sanitary water priority; determine a space conditioning priority; compare the sanitary water priority to the space conditioning priority; and direct energy from an energy source to heat the sanitary water and/or condition the space based upon the compared priorities; characterised in that the controller is configured such that at least one of the sanitary water priority and space conditioning priority is, when there are competing load requirements between sanitary water heating and temperature control, non binary.

The details of one or more embodiments are set forth in the accompanying drawings, as listed below, and the subsequent description of example embodiments. Other features, objects, and advantages will be apparent from the description and drawings, and from the claims.
FIG. 1 is a schematic partial view of a building.
FIG. 2 is a plot/graph of exemplary water heating priority versus measured water temperature.
FIG. 3 is a plot/graph of exemplary room heating priority (heating priority) versus measured room temperature.
FIG. 4 is a plot/graph of exemplary room cooling priority (cooling priority) versus measured room temperature.
FIG. 5 is a flowchart of a control scheme for production of hot water and climate control for the building of FIG. 1.
FIG. 6 is a flowchart of heating and cooling priority determination (collectively room priority) in the control scheme of FIG. 5.

Like reference numbers and designations in the various drawings indicate like elements.

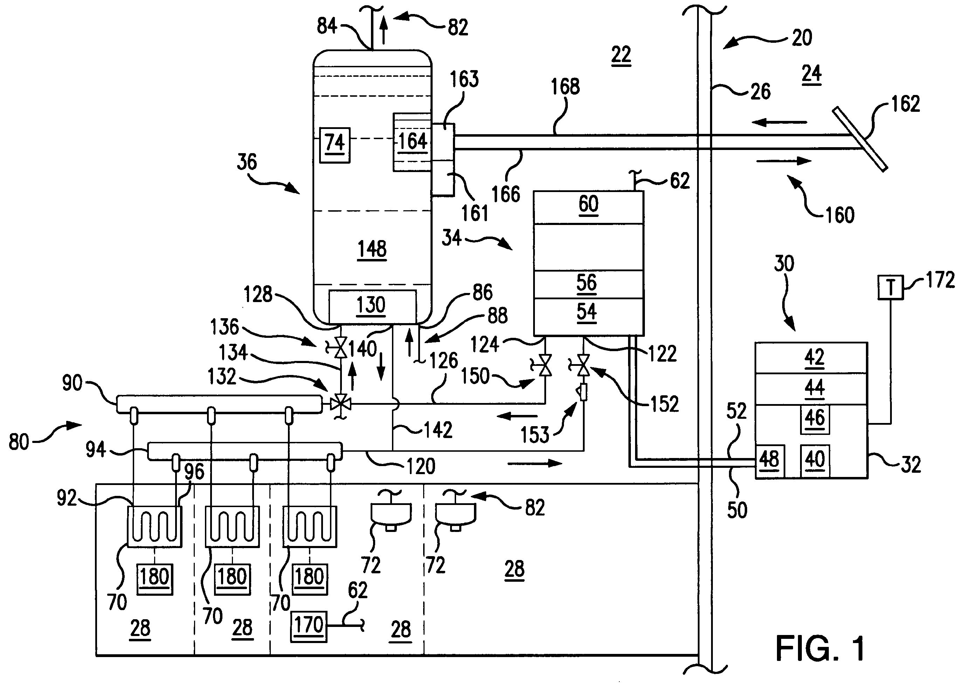

FIG. 1 shows a building 20 having an interior 22. The interior is separated from an exterior 24 by one or more wall structures 26. Within the building, there may be one or more rooms or spaces 28 which are subject to climate control. A climate control and water heating system 30 includes an outdoor unit 32. Within the building, the system 30 includes a hydronic module 34 and a hot water tank 36.

The exemplary outdoor unit 32 includes several system components including an electric motor-driven refrigerant compressor 40, an outdoor heat exchanger 42 (e.g., a refrigerant-air coil heat exchanger which acts as a heat rejection heat exchanger (e.g., a condenser) with the system in a cooling mode and as a heat absorption heat exchanger (evaporator) in a heating mode), a fan 44 for driving an airflow across the heat exchanger 42, an expansion device 46 for expanding the refrigerant, and a reversing valve 48 for switching between heating and cooling modes. The outdoor unit is connected to the hydronic module by refrigerant lines 50 and 52. In the exemplary implementation, the system includes a control unit (controller or control system) 60 (e.g., within the hydronic module 34) which, in turn, may be connected to the outdoor unit and other components via one or more lines 62 (e.g., hardwired control signal or powered lines, or wireless links). An exemplary controller includes memory for storing control programs and operation data, a processor for executing the programs, and associated circuitry for interfacing with sensors, user input devices, displays, the controlled components, and the like.

The exemplary hydronic module 34 further includes a refrigerant-water heat exchanger 54 (e.g., a brazed plate heat exchanger) whose refrigerant side is connected to the lines 50 and 52. It may further include a pump 56 for driving water flow across the heat exchanger 54 to exchange heat between the water (or other heat transfer liquid) flow and the refrigerant flow.

Within the room(s) 28, there may be one or more terminals (cooling/heating terminals) 70. In a heating mode, the terminals 70 transfer heat from heated recirculating water to the room interior. In a cooling mode, cooled recirculating water passing through the terminals 70 absorbs heat Exemplary terminals 70 are water-air heat exchangers such as radiators, fan units, or radiant underfloor heating. Within the room(s) 28, there may also be one or more sanitary hot water (DHW) outlets 72 (e.g., faucets, lines for clothes washers, etc.) for sanitary/DHW use. Exemplary cooling/heating terminals 70 are along a cooling/heating water network (or circuit) 80; whereas exemplary DHW outlets 72 are along a sanitary water (DHW) network 82. In an exemplary implementation, the sanitary water network 82 extends from a first outlet 84 of the tank 36. The tank 36 further has a supply inlet 86 (e.g., from a municipal water supply 88).

FIG. 1 further shows the system 80 as including a supply collector 90 coupled to inlets 92 of the terminals 70 and a return collector 94 coupled to outlets 96 of the terminals 70. A return line 120 couples the return collector to the hydronic module (e.g., to an inlet port 122 thereof). The hydronic module further includes an outlet port 124 leading to an outlet conduit 126. The outlet conduit 126 and port 124 may, via a valve 132, be placed in selective communication with either: (a) the supply collector 90; or (b) an inlet 128 of a heat exchanger 130 of the tank 36. The exemplary valve 132 is a motor-driven three-way valve in the line 126 between the port 124 and the supply collector 90. The third port of the valve 132 feeds a branch 134 which extends to the inlet port 128. A flow regulation valve 136 may be within the line 134 to regulate pressure and flow. The valve 136 may be actively controlled by the controller 60.

An outlet 140 of the heat exchanger 130 of the tank 36 is also connected to the line 120 (e.g., via a line 142). In a water heating mode, the heat exchanger 130 (e.g., a coil heat exchanger) transfers heat from water recirculating in a loop to/from the hydronic unit to the accumulation 148 of water in the tank 36. FIG. 1 also shows shutoff valves 150 and 152 in the lines 120 and 126 which may be shut off to isolate the hydronic unit (e.g., for maintenance) and a filter 153 upstream of the valve 152.

In a basic/normal building or room heating mode (heating mode), the outdoor unit is run in a heat pump mode with the heat exchanger 42 absorbing heat from ambient air. The heated refrigerant is delivered to the hydronic unit 34 where, in the heat exchanger 54, it heats a recirculating flow of water driven by the pump. The water flow is drawn in through the inlet 122 through the line 120 and discharged from the outlet 124 through the line 126. The flow passes through the valve 132 to the supply collector 90. The valve 132 blocks the branch 134 so that there is no flow therethrough. The flow passes from the supply collector 90 to the inlets 92 of the terminals 70 and heats air in the room(s), thereby slightly cooling the recirculating water. The cooled water exits the terminals from the outlets 96 and returns to the return header 94. The recirculating water flow then passes into the line 120 to the inlet 122 and is re-heated in the heat exchanger 54 and recirculates. During this interval, if hot water is needed for sanitary (DHW) use (e.g., at any of the outlets 72), the outlet(s) 72 are opened (e.g., manually) drawing water from the tank outlet 84 which, in turn, is made up via an inflow of water through the inlet 86 (thereby reducing temperature of the accumulated water 148 in the tank and ultimately requiring heating of the accumulation).

A basic/normal building or room cooling mode is otherwise similar to the building heating mode except that, instead of running as a heat pump, the reversing valve 48 is actuated to run the outdoor unit to reject heat and cool refrigerant. Cold refrigerant is thus passed to the hydronic unit 34 where, in the heat exchanger 54, it cools the recirculating flow of water. The cooled water passes to the terminals as described above and cools the rooms, thereby being slightly heated and returning to the hydronic unit for re-cooling and recirculation.

In a water heating mode (DHW mode), the outdoor unit may normally be off (e.g., when there is no demand). To satisfy DHW demand, the outdoor unit may be run in its heat pump mode as in the building heating mode. The valve 132, however, is actuated by the controller to block flow to the supply collector 90 and pass the flow from the outlet 124 of the hydronic unit to the inlet 128 and the associated heat exchanger 130 to heat the accumulation 148 of water in the tank 36. After rejecting heat to the water accumulation 148, the flow exits the outlet 140 and returns via the branch 142 and line 120 to the hydronic unit inlet 122 for re-heating and recirculation in a recirculating water (DHW) heating loop.

As an optional further variation, provision is made for solar heating of water. A solar heating subsystem 160 comprises a solar collector 162. A heat transfer fluid (e.g., water) is driven along a solar recirculating loop by a pump 163 and controlled by a controller 161. The solar recirculating loop extends to a heat exchanger (e.g., liquid-liquid) 164 in the tank 136 for heating the accumulated water 148 in the tank. The heat exchanger 164 is coupled by supply and return lines 166 and 168 to the solar collector.

Various sensors and input devices may be provided for controlling operation of the system. In an exemplary implementation, each room or zone may have a controller/sensor unit 170. There may be an external temperature sensor 172 and a tank temperature sensor 74. These may be coupled to the controller 60 as discussed above. Additionally, there may be individual thermostats 180 controlling flow through the associated terminals. The thermostats 180 may merely be mechanical thermostats or may be more sophisticated devices which may be in communication with the controller 60. The solar heating subsystem may comprise various sensors (e.g., temperature sensors at the tank and at the collector) which are used by the controller 161 to determine whether the solar heating subsystem is capable of satisfying DHW demand.

In operation, there may be trade-offs between using the available capacity of the outdoor unit 32 for domestic water heating on the one hand and climate control (heating or cooling) on the other hand. If the tank temperature (temperature of the accumulation 148) is below a desired target and the room temperature( of one or more rooms or zones) is outside of a target range, the outdoor unit may be prioritized to handle one of these two loads. The controller 60 is programmed with a prioritization scheme. The scheme comes into play when there are competing load requirements. Under this scheme, the controller determine priorities associated with the two loads and compare the priorities to determine which load is served. One or both of these priorities is other than binary (binary referring to a mere yes-no or one versus zero situation rather than a priority expressed in a number of binary bits). For example, this is distinguished from circumstances wherein any demand from one of the loads gives priority to that load.

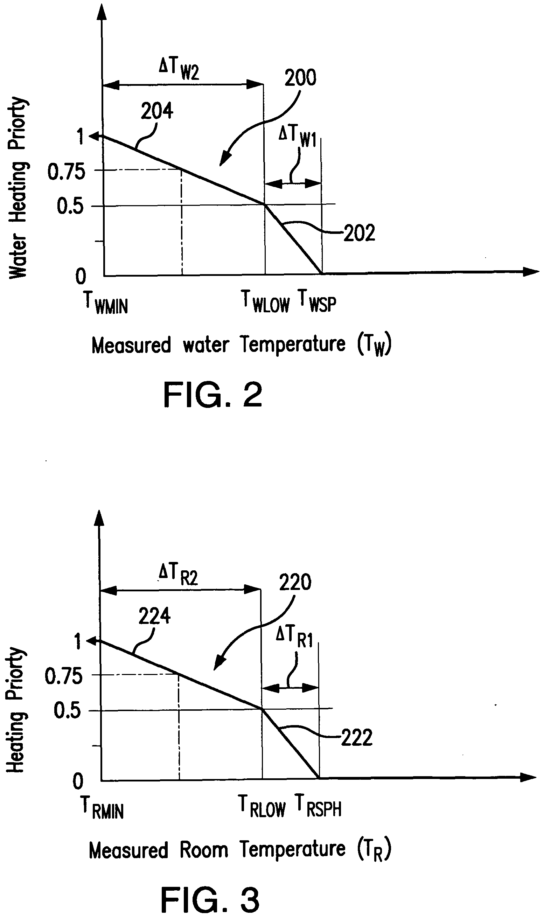

In an example, these non-binary priorities are assigned to both the heating/cooling and water heating. FIG. 2 is a graph showing domestic water heating priority (as a function or curve) against measured water temperature. T_{WSP} represents the water temperature set point (e.g., the desired domestic hot water temperature) which may be measured by the tank temperature sensor 74. If the measured temperature is at or above T_{WSP}, the priority is zero. T_{WMIN} is lower. T_{WMIN} may represent a minimum tolerable water temperature. At temperatures below T_{WMIN}, the priority is one. An intermediate temperature T_{WLOW} may represent a different temperature such as a minimum desirable temperature. This is assigned an intermediate priority (e.g., 0.5). The difference between T_{WSP} and T_{WLOW} is shown as ΔT_{W1}. The difference between T_{WLOW} and T_{WMIN} is shown as ΔT_{W2.} The exemplary system assigns priority linearly between T_{WMIN} and T_{WLOW} and between T_{WLOW} and T_{WSP}. Thus, with the measured water temperature (T_{W}) above T_{WSP} exemplary priority is zero. With T_{W} below T_{WS}p, the priority 200 comprises a first linear function 202 from zero priority at zero difference to the exemplary 0.5 value of intermediate priority when T_{W} reaches T_{WO} at a first difference of ΔT_{W1}. The priority 200 then comprises a second linear function 204 from the intermediate priority at the first difference to a priority equal to one at T_{WMIN} (a second difference of ΔT_{W1} plus ΔT_{W2}.). With the exemplary intermediate priority of 0.5 and ΔT_{W1} being less than ΔT_{W2}, the resulting priority plot tends to have a convex upward character between T_{WMIN} and T_{WSP}. In an exemplary implementation, these three values may be pre-set at the factory. However, the different values may have different degrees of user adjustability. For example, in an exemplary implementation, T_{WSP} may be re-set by the end user as in adjusting a normal thermostat. In an exemplary implementation, T_{WMIN} and T_{WLOW} are not directly entered variables. Rather, ΔT_{W1} and ΔT_{W2} are the variables entered and stored in the controller. Again, these may be pre-set at the factory but may also be adjusted by an installer (but may be less likely to be adjusted by the end user). In this exemplary implementation, if the end user changes the setting to raise or lower T_{WSP}, then T_{WLOW} and T_{WMIN} will automatically shift by the same amount. In an exemplary implementation, ΔT_{W1} is set at 5C and ΔT_{W2} is set at 10C. The exemplary ΔT_{W1} is thus smaller than the ΔT_{W2} (e.g., 20-60% of ΔT_{W2}). The exemplary ΔT_{W1} is 3-10C, more narrowly, 4-8C. More broadly, the combined ΔT_{W1} + ΔT_{W2} is an exemplary 10-30C, more narrowly 12-20C.

Similarly, FIG. 3 shows a room heating priority 220 (as a function or curve) against measured room temperature. Room temperature set-point for heating (T_{RSPH}, minimum room temperature (T_{RMIN}), the intermediate room temperature (T_{RLOW}) and their associated deltas (ΔT_{R1} and ΔT_{R2}) may be similarly configured to those of the water heating priority. Exemplary room deltas are smaller than water deltas and the exemplary associated temperatures are lower. In the illustrated example, an exemplary ΔT_{R1} is 2°C and ΔT_{R2}, is 4°C. The two exemplary linear functions are shown as 222 and 224 and similarly provide a convex-upward profile with ΔT_{R1} being less than ΔT_{R2} and an associated intermediate priority of 0.5. The exemplary ΔT_{R1} is thus smaller than the ΔT_{R2} (e.g., 20-60% of ΔT_{R2}). The exemplary ΔT_{R1} is 0.5-5C, more narrowly, 1-2.5C. More broadly, the combined ΔT_{R1} + ΔT_{R2} is an exemplary 2-10C, more narrowly 3-8C.

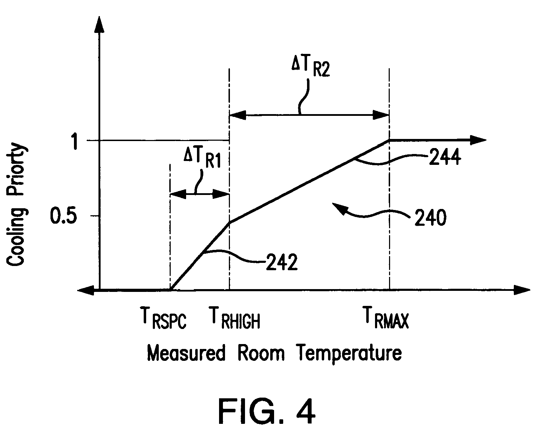

FIG. 4 shows room cooling priority 240 having linear functions 242 and 244 where the same ΔT_{R1} and ΔT_{R2} of FIG. 3 are used to determine a maximum tolerable room temperature T_{RMAX} and an intermediate temperature T_{RHIGH} (which may represent a maximum desirable room temperature). Although the same room temperature setpoint may be used as in FIG. 3, for purposes of illustration, the room temperature setpoint for cooling is designated T_{RSPC}. For example, a user might set T_{RSPH} to 26C and T_{RSPC} to 28C. Thus, there may be a non-zero temperature range wherein room priority is zero. This may be similar to the room heating priority except with reversed signs. Thus, room cooling priority is one above T_{RMAX} and zero below T_{RSPC}.

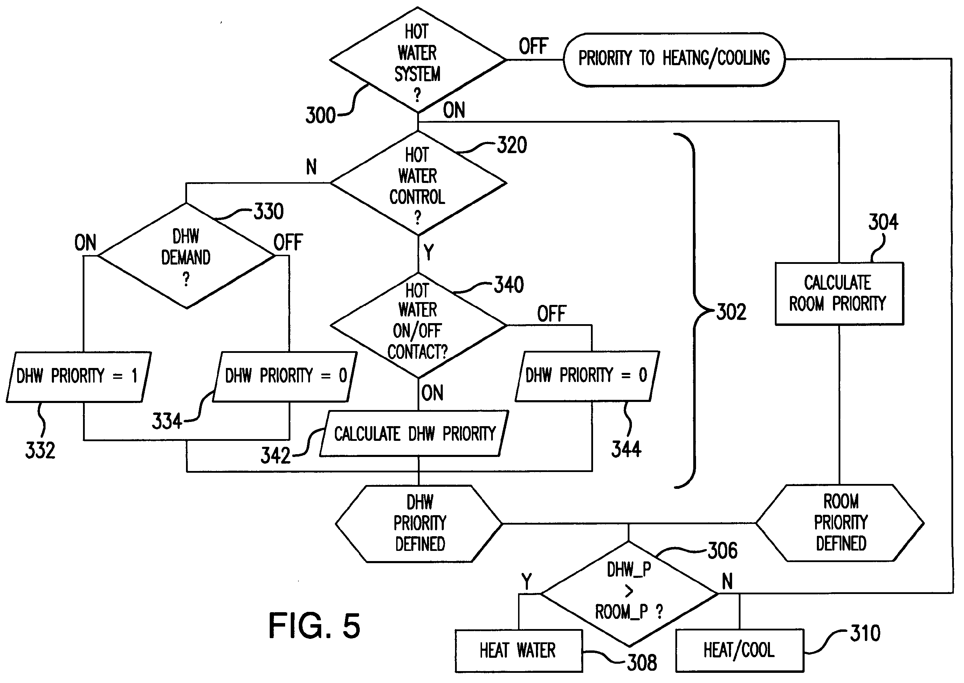

FIG. 5 is an operational flowchart for a controller programmed to perform the non-binary prioritization. However, the controller may act according to these prioritizations in limited circumstances. In other circumstances, the controller may perform otherwise. For example, there may be a hardware incompatibility which causes the system to operate in another mode. Additionally, certain operational conditions may alter operation. Thus, portions of the flowchart discussed below reflect the exemplary non-binary prioritization operation whereas other portions reflect other operations. In the exemplary implementation, the user sets the system to one of four modes: a heating mode in which (as discussed below) the room(s) are heated in response to heating demand and domestic water is heated responsive to DHW demand; a cooling mode in which the room(s) are cooled responsive to a cooling demand and domestic water heated responsive to DHW demand; a DHW (DHW-only) mode in which no heating or cooling is performed but domestic hot water heated responsive to a DHW demand; and an off mode in which there is no heating or cooling and no domestic water heating. Modes may be set on a control panel or the like.

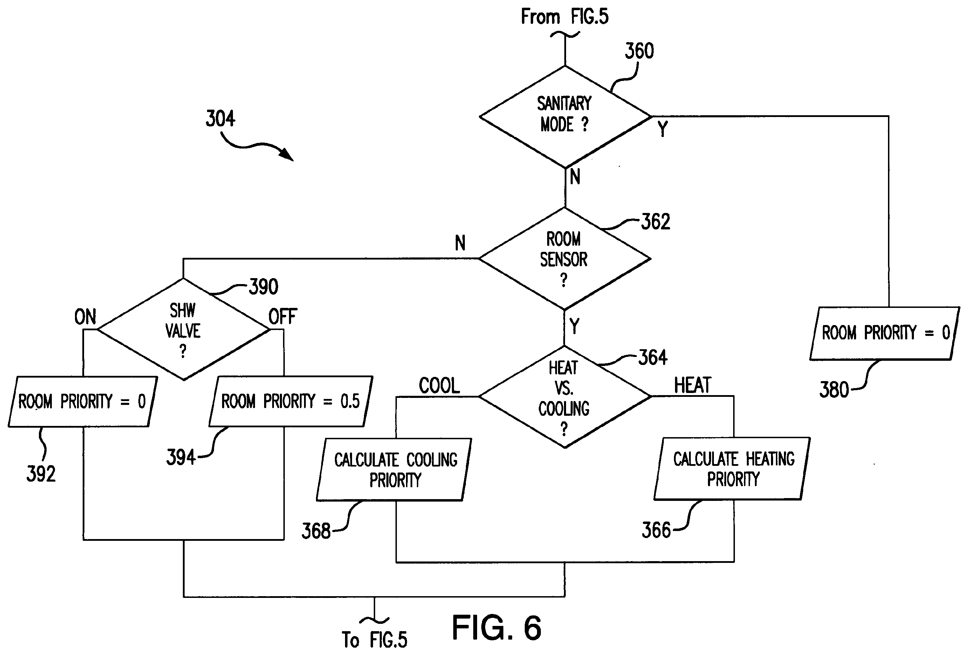

An initial step 300 is merely a determination of whether a domestic hot water system is coupled to the hydronic unit. This determination may be by reading a value or setting entered by the installer when the system is installed or by a detection by the controller. If "no" (value equals "off') priority is given to heating/cooling. If "yes" (value is "on") then domestic hot water (DHW) priority may be determined 302 and room heating/cooling priority (room priority) may be determined 304 (described in detail relative to FIG. 6 below). It is noted that these logic variables may be expressed in different ways (e.g., "on" as "not off', and the like). With the respective priorities defined/determined, they are compared 306. If DHW priority (DHW_P) is greater than room priority (Room_P, then energy is directed to heat the water (e.g., via switching the valve 132 to direct flow to the tank) and, if not already, switching the outdoor unit 32 to heat pump mode. If, however, the domestic hot water priority is not greater than the room priority, then the system is operated in a heating or cooling mode 310 by directing energy to such heating or cooling use to condition the space. The valve 132 is switched (if not already there) to pass water through the line 126 to the supply collector 90 and the outdoor unit is switched to (if necessary) the heat pump mode and run in the heat pump mode for heating or a cooling mode for cooling.

FIG. 5 shows the exemplary determination 302 of DHW priority. In a first decision block 320, it is determined whether there is hot water control. For example, although the hydronic unit may be connected to a water tank, that water tank might not be compatible with the non-binary control. For example, there might be a legacy or third party tank without the ability to communicate specific temperature information to the controller (e.g., only the ability to communicate need for heating water or not). This may involve reading an installer-set parameter or a detection by the controller. Thus, in this latter situation, there is a simple binary determination 330 of whether there is need for heating water (e.g., a simple switched binary output from the tank to the controller). If "yes" (value equals "on") then DHW priority is set to one 332. If "no" (value equals "off") then DHW priority is set to zero 334.

If, however, at block 320 it is determined that there is a compatible hot water tank under compatible control, then the system may proceed otherwise. In the exemplary system where there is solar assistance, the assistance may cause an override of the need for use of power from the hydronic unit to heat water. This override is determined by (at decision block 340) the status of the hot water on/off contact. The state of the hot water on/off contact may be determined/generated by the controller 161 of the solar heating subsystem responsive to sensed parameters. The "off' condition reflects a decision by the solar subsystem controller 161 that the solar heating subsystem is capable of satisfying DHW demand. If the contact is "on" (no override) then DHW priority is calculated at block 342 (e.g., according to the compound linear function depicted in the graph of FIG. 2). If, instead, the hot water contact is "off', then domestic hot water priority is set to zero at block 344.

FIG. 6 shows an exemplary heating/cooling priority (room priority) determination 304. A first decision block 360 is a determination whether the system is in the DHW mode. If "no", a second decision block 362 queries whether there is an interior (e.g., room) temperature sensor available. This may involve reading a parameter/setting originally entered by the installer. If "yes", it is determined which of heating and cooling is required at block 364. This may involve reading the user-entered/set mode setting. If heating, then heating priority is determined at block 366 according to the plot of FIG. 3. If cooling, then cooling priority is determined according to the plot of FIG. 4 at block 368. If, however, the system at decision block 360 was in sanitary mode, then domestic hot water priority is set to one at block 380. If the room sensor determination at block 362 was "no", then it is queried what the output of the sanitary hot water valve is at block 390. For example, this may identify the last state of the valve 132, with "on" indicating passing flow along a branch 134 and "off" indicating not passing water to the tank. If "on", then room priority is set to zero at block 392. If "off', then room priority is set to 0.5 at block 394. This prevents excess cycling. For example, in the exemplary implementation, assume the system has been heating water. It will keep heating water until DHW priority drops to zero. With both room priority and DHW priority at zero, block 306 will switch over to heating or cooling mode. However, once it is then in heating/cooling mode, room priority is set to 0.5. It may thus take a while for DHW priority to exceed this and cause the system to switch back to water heating mode.

Although an embodiment is described above in detail, such description is not intended for limiting the scope of the present disclosure. It will be understood that various modifications may be made without departing from the invention as defined by the scope of the claims. For example, when implemented as a reengineering or remanufacturing of a baseline system (e.g., via reprogramming) details of the baseline system may influence details of any particular implementation. Similarly, details of the particular building may influence details of any particular implementation. Accordingly, other embodiments are within the scope of the following claims.

## Claims

1. A method for controlling a system that uses an energy source (32) to both heat sanitary water and control temperature of a habitable space (28), the method comprising:
determining (302) a sanitary water priority (200);
determining (304) a space conditioning priority (220, 240);
comparing (306) the sanitary water priority to the space conditioning priority; and
directing energy from the energy source to heat the sanitary water and/or condition the space based upon the compared priorities;
**characterised in that** when there are competing load requirements between sanitary water heating and temperature control, at least one of the sanitary water priority and space conditioning priority is non-binary.

2. The method of claim 1 wherein:
the determining the sanitary water priority (200) is, when there are competing load requirements, non-binary based upon a measured water temperature (T_{W}); and
the determining the space conditioning priority (220; 240) is, when there are competing load requirements, non-binary based upon a measured room temperature (T_{R}).

3. The method of claim 1 wherein:
the determining the sanitary water priority (200) is, when there are competing load requirements, non-binary based upon a measured water temperature (T_{W}) according to a first segmented linear function; and
the determining the space conditioning priority (220; 240) is, when there are competing load requirements, non-binary based upon a measured room temperature (T_{R}) according to a second segmented linear function.

4. The method of claim 1 wherein:
the determining the sanitary water priority (200) is, when there are competing load requirements, non-binary based upon a measured water temperature (T_{W}) according to a first priority curve; and
the determining the space conditioning priority (220; 240) is, when there are competing load requirements, non-binary based upon a measured room temperature (T_{R}) according to a second priority curve.

5. The method of claim 1 wherein:
the determining the sanitary water priority (200) is, when there are competing load requirements, non-binary based upon a measured water temperature (T_{W}) according to a first priority curve; and
the determining the space conditioning priority (220; 240) is, when there are competing load requirements, non-binary based upon a measured room temperature (T_{R}) according to a second priority curve for heating and a third priority curve for cooling.

6. The method of claim 1 wherein:
the determining the sanitary water priority (200) is based upon a difference between a sanitary water temperature setpoint and a first measured temperature (T_{W}); and
the determining the space conditioning priority (220; 240) is based upon a difference between a space temperature setpoint (T_{RSPH}; T_{RSPC})and a second measured temperature (T_{R}).

7. The method of claim 6 wherein:
the first measured temperature is a temperature of a sanitary water storage accumulation (148); and
the second measured temperature comprises a measured room temperature.

8. The method of claim 6 wherein:
the sanitary water priority comprises a first linear function (202) from zero priority at zero difference to a first intermediate priority at a first difference (ΔT_{W1}) and a second linear function (204) from said first intermediate priority at said first difference to 100% priority at a second difference (ΔT_{W1} + ΔT_{W2}); and
the space conditioning priority comprises a third linear function (222; 242) from zero priority at zero difference to a second intermediate priority at a third difference and a fourth linear function (224; 244) from said second intermediate priority at said third difference to 100% at a fourth difference.

9. The method of claim 1 wherein:
the directing comprises operating a higher priority task at full capacity.

10. The method of claim 1 wherein:
the directing comprises directing the output of the source only to a higher priority task.

11. The method of claim 1 wherein:
the energy source comprises a vapor compression system and the directing comprises operating the vapor compression system.

12. A system for heating sanitary water (148) and controlling the temperature of a habitable space (28), the system comprising:
a controller (60) configured to:
determine a sanitary water priority (200);
determine a space conditioning priority (220; 240);
compare the sanitary water priority to the space conditioning priority; and
direct energy from an energy source (32) to heat the sanitary water and/or condition the space based upon the compared priorities;
**characterised in that** the controller is configured such that at least one of the sanitary water priority and space conditioning priority is, when there are competing load requirements between sanitary water heating and temperature control, non-binary.

13. The system of claim 12 wherein:
the determining the sanitary water priority (200) is based upon a difference between a sanitary water temperature setpoint and a first measured temperature (T_{W});
the determining the space conditioning priority (220; 240) is based upon a difference between a space temperature setpoint (T_{RSPH;} T_{RSPC})and a second measured temperature (T_{R}).

14. The system of claim 12 wherein:
the system includes the energy source; and
the energy source comprises a vapor compression system.

15. The system of claim 14 wherein the system further comprises:
an outdoor unit having a first heat exchanger (42) of the vapor compression system;
an indoor unit (34) having a second heat exchanger (54) of the vapor compression system;
a sanitary hot water storage tank (36);
one or more sanitary water outlets (72) coupled to the sanitary hot water tank (36) to receive heated water therefrom;
a heat transfer liquid network (80) including one or more terminals (70) positioned to exchange heat with the habitable space; and
a conduit system for selectively placing the heat exchanger (130) of the tank (36) or the network (80) in recirculating the transfer of fluid to communication with the second heat exchanger.

## Patentansprüche

1. Verfahren zum Steuern eines Systems, das eine Energiequelle (32) sowohl zum Heizen von Sanitärwasser als auch zum Steuern der Temperatur eines bewohnbaren Raums (28) verwendet, wobei das Verfahren Folgendes umfasst:
Bestimmen (302) einer Sanitärwasserpriorität (200);
Bestimmen (304) einer Raumkonditionierungspriorität (220, 240) ;
Vergleichen (306) der Sanitärwasserpriorität mit der Raumkonditionierungspriorität; und
Leiten von Energie von der Energiequelle zum Erwärmen des Sanitärwassers und/oder Konditionieren des Raums, basierend auf den verglichenen Prioritäten;
**dadurch gekennzeichnet, dass**, wenn konkurrierende Lastanforderungen zwischen Sanitärwassererwärmung und Temperatursteuerung vorliegen, wenigstens eine von der Sanitärwasserpriorität und der Raumkonditionierungspriorität nicht binär ist.

2. Verfahren nach Anspruch 1, wobei:
das Bestimmen der Sanitärwasserpriorität (200) dann, wenn konkurrierende Lastanforderungen vorliegen, nicht binär ist, basierend auf einer gemessenen Wassertemperatur (T_{W}); und
das Bestimmen der Raumkonditionierungspriorität (220; 240) dann, wenn konkurrierende Lastanforderungen vorliegen, nicht binär ist, basierend auf einer gemessenen Raumtemperatur (T_{R}).

3. Verfahren nach Anspruch 1, wobei:
das Bestimmen der Sanitärwasserpriorität (200) dann, wenn konkurrierende Lastanforderungen vorliegen, nicht binär ist, basierend auf einer gemessenen Wassertemperatur (T_{W}) gemäß einer ersten segmentierten linearen Funktion; und
das Bestimmen der Raumkonditionierungspriorität (220; 240) dann, wenn konkurrierende Lastanforderungen vorliegen, nicht binär ist, basierend auf einer gemessenen Raumtemperatur (T_{R}) gemäß einer zweiten segmentierten linearen Funktion.

4. Verfahren nach Anspruch 1, wobei:
das Bestimmen der Sanitärwasserpriorität (200) dann, wenn konkurrierende Lastanforderungen vorliegen, nicht binär ist, basierend auf einer gemessenen Wassertemperatur (T_{W}) gemäß einer ersten Prioritätskurve; und
das Bestimmen der Raumkonditionierungspriorität (220; 240) dann, wenn konkurrierende Lastanforderungen vorliegen, nicht binär ist, basierend auf einer gemessenen Raumtemperatur (T_{R}) gemäß einer zweiten Prioritätskurve.

5. Verfahren nach Anspruch 1, wobei:
das Bestimmen der Sanitärwasserpriorität (200) dann, wenn konkurrierende Lastanforderungen vorliegen, nicht binär ist, basierend auf einer gemessenen Wassertemperatur (T_{W}) gemäß einer ersten Prioritätskurve; und
das Bestimmen der Raumkonditionierungspriorität (220; 240) dann, wenn konkurrierende Lastanforderungen vorliegen, nicht binär ist, basierend auf einer gemessenen Raumtemperatur (T_{R}) gemäß einer zweiten Prioritätskurve für das Erwärmen und einer dritten Prioritätskurve für das Kühlen.

6. Verfahren nach Anspruch 1, wobei:
das Bestimmen der Sanitärwasserpriorität (200) auf einer Differenz zwischen einem Sanitärwassertemperatursollwert und einer ersten gemessenen Temperatur (T_{W}) basiert; und
das Bestimmen der Raumkonditionierungspriorität (220; 240) auf einer Differenz zwischen einem Raumtemperatursollwert (T_{RSPH}; T_{RSPC}) und einer zweiten gemessenen Temperatur (T_{R}) basiert.

7. Verfahren nach Anspruch 6, wobei:
die erste gemessene Temperatur eine Temperatur der Sanitärwasserspeicherakkumulation (148) ist, und
die zweite gemessene Temperatur eine gemessene Raumtemperatur umfasst.

8. Verfahren nach Anspruch 6, wobei:
die Sanitärwasserpriorität eine erste lineare Funktion (202) von einer Nullpriorität bei einer Differenz von null bis zu einer ersten Zwischenpriorität bei einer ersten Differenz (ΔT_{W1},) und eine zweite lineare Funktion (204) von der ersten Zwischenpriorität bei der ersten Differenz bis zu einer 100-%-Priorität bei einer zweiten Differenz (ΔT_{W1}+ΔT_{W2}) umfasst; und
die Raumkonditionierungspriorität eine dritte lineare Funktion (222; 242) von einer Nullpriorität bei einer Differenz von null bis zu einer zweiten Zwischenpriorität bei einer dritten Differenz und eine vierte lineare Funktion (224; 244) von der zweiten Zwischenpriorität bei der dritten Differenz bis zu einer 100-%-Priorität bei einer vierten Differenz umfasst.

9. Verfahren nach Anspruch 1, wobei:
das Leiten das Ausführen einer Aufgabe mit höherer Priorität bei voller Kapazität umfasst.

10. Verfahren nach Anspruch 1, wobei:
das Leiten das Leiten der Ausgabe der Quelle ausschließlich zu einer Aufgabe mit höherer Priorität umfasst.

11. Verfahren nach Anspruch 1, wobei:
die Energiequelle ein Dampfdrucksystem umfasst und das Leiten das Betreiben des Dampfdrucksystems umfasst.

12. System zum Erwärmen von Sanitärwasser (148) und zum Steuern der Temperatur eines bewohnbaren Raums (28), wobei das System Folgendes umfasst:
eine Steuereinrichtung (60), die für Folgendes konfiguriert ist:
Bestimmen einer Sanitärwasserpriorität (200);
Bestimmen einer Raumkonditionierungspriorität (220, 240) ;
Vergleichen der Sanitärwasserpriorität mit der Raumkonditionierungspriorität; und
Leiten von Energie von einer Energiequelle (32) zum Erwärmen des Sanitärwassers und/oder Konditionieren des Raums, basierend auf den verglichenen Prioritäten;
**dadurch gekennzeichnet, dass** die Steuereinrichtung derart konfiguriert ist, dass wenigstens eine von der Sanitärwasserpriorität und der Raumkonditionierungspriorität nicht binär ist, wenn konkurrierende Lastanforderungen zwischen Sanitärwassererwärmung und Temperatursteuerung vorliegen.

13. System nach Anspruch 12, wobei:
das Bestimmen der Sanitärwasserpriorität (200) auf einer Differenz zwischen einem Sanitärwassertemperatursollwert und einer ersten gemessenen Temperatur (T_{W}) basiert; und
das Bestimmen der Raumkonditionierungspriorität (220; 240) auf einer Differenz zwischen einem Raumtemperatursollwert (T_{RSPH}; T_{RSPC}) und einer zweiten gemessenen Temperatur (T_{R}) basiert.

14. System nach Anspruch 12, wobei:
das System die Energiequelle beinhaltet; und
die Energiequelle ein Dampfdrucksystem umfasst.

15. System nach Anspruch 14, wobei das System ferner Folgendes umfasst:
eine Außeneinheit mit einem ersten Wärmetauscher (42) des Dampfdrucksystems;
eine Inneneinheit (34) mit einem zweiten Wärmetauscher (54) des Dampfdrucksystems;
einen Sanitärheißwasserspeichertank (36);
einen oder mehrere Sanitärwasserauslässe (72), die an den Sanitärheißwassertank (36) gekoppelt sind, um Wasser davon aufzunehmen;
ein Wärmeübertragungsflüssigkeitsnetz (80), das einen oder mehrere Anschlüsse (70) beinhaltet, die zum Austauschen von Wärme mit dem bewohnbaren Raum angeordnet sind; und
ein Leitungssystem, um selektiv den Wärmetauscher (130) des Tanks (36) oder das Netz (80) dazu zu bringen, eine Rückleitung der Fluidübertragung für eine Verbindung mit dem zweiten Wärmetauscher durchzuführen.

## Revendications

1. Procédé de commande d'un système qui utilise une source d'énergie (32) pour chauffer à la fois de l'eau sanitaire et commander la température d'un espace habitable (28), le procédé comprenant :
la détermination (302) d'une priorité d'eau sanitaire (200) ;
la détermination (304) d'une priorité de conditionnement d'espace (220, 240) ;
la comparaison (306) de la priorité d'eau sanitaire avec la priorité de conditionnement d'espace ; et
la direction d'énergie provenant de la source d'énergie pour chauffer l'eau sanitaire et/ou conditionner l'espace sur la base des priorités comparées ;
**caractérisé en ce que** lorsqu'il y a des exigences de charge concurrentes entre le chauffage de l'eau sanitaire et la commande de température, au moins une de la priorité d'eau sanitaire et de la priorité de conditionnement d'espace est non binaire.

2. Procédé selon la revendication 1, dans lequel :
la détermination de la priorité d'eau sanitaire (200) est, lorsqu'il y a des exigences de charge concurrentes, non binaire sur la base d'une température d'eau mesurée (T_{W}) ; et
la détermination de la priorité de conditionnement d'espace (220 ; 240) est, lorsqu'il y a des exigences de charge concurrentes, non binaire sur la base d'une température ambiante mesurée (T_{R}).

3. Procédé selon la revendication 1, dans lequel :
la détermination de la priorité d'eau sanitaire (200) est, lorsqu'il y a des exigences de charge concurrentes, non binaire sur la base d'une température d'eau mesurée (T_{W}) selon une première fonction linéaire segmentée ; et
la détermination de la priorité de conditionnement d'espace (220 ; 240) est, lorsqu'il y a des exigences de charge concurrentes, non binaire sur la base d'une température ambiante mesurée (T_{R}) selon une seconde fonction linéaire segmentée.

4. Procédé selon la revendication 1, dans lequel :
la détermination de la priorité d'eau sanitaire (200) est, lorsqu'il y a des exigences de charge concurrentes, non binaire sur la base d'une température d'eau mesurée (T_{W}) selon une première courbe de priorité ; et
la détermination de la priorité de conditionnement d'espace (220 ; 240) est, lorsqu'il y a des exigences de charge concurrentes, non binaire sur la base d'une température ambiante mesurée (T_{R}) selon une seconde courbe de priorité.

5. Procédé selon la revendication 1, dans lequel :
la détermination de la priorité d'eau sanitaire (200) est, lorsqu'il y a des exigences de charge concurrentes, non binaire sur la base d'une température d'eau mesurée (T_{W}) selon une première courbe de priorité ; et
la détermination de la priorité de conditionnement d'espace (220 ; 240) est, lorsqu'il y a des exigences de charge concurrentes, non binaire sur la base d'une température ambiante mesurée (T_{R}) selon une seconde courbe de priorité pour le chauffage et une troisième courbe de priorité pour le refroidissement.

6. Procédé selon la revendication 1, dans lequel :
la détermination de la priorité d'eau sanitaire (200) est basée sur une différence entre une valeur de consigne de température d'eau sanitaire et une première température mesurée (T_{W}) ; et
la détermination de la priorité de conditionnement d'espace (220 ; 240) est basée sur une différence entre une valeur de consigne de température d'espace (T_{RSPH} ; T_{RSPC}) et une seconde température mesurée (T_{R}) .

7. Procédé selon la revendication 6, dans lequel :
la première température mesurée est une température d'une accumulation de stockage d'eau sanitaire (148) ; et
la seconde température mesurée comprend une température ambiante mesurée.

8. Procédé selon la revendication 6, dans lequel :
la priorité d'eau sanitaire comprend une première fonction linéaire (202) de la priorité zéro à la différence de zéro à une première priorité intermédiaire à une première différence (ΔT_{W1}) et une seconde fonction linéaire (204) de ladite première priorité intermédiaire à ladite première différence à la priorité 100 % à une seconde différence (ΔT_{W1} + ΔT_{W2}) ; et
la priorité de conditionnement d'espace comprend une troisième fonction linéaire (222 ; 242) de la priorité zéro à une différence de zéro à une seconde priorité intermédiaire à une troisième différence et une quatrième fonction linéaire (224 ; 244) de ladite seconde priorité intermédiaire à ladite troisième différence à 100 % à une quatrième différence.

9. Procédé selon la revendication 1, dans lequel :
la direction comprend l'exécution d'une tâche de priorité plus élevée à pleine capacité.

10. Procédé selon la revendication 1, dans lequel :
la direction comprend la direction de la sortie de la source seulement à une tâche de priorité plus élevée.

11. Procédé selon la revendication 1, dans lequel :
la source d'énergie comprend un système de compression de vapeur et la direction comprend l'actionnement du système de compression de vapeur.

12. Système pour chauffer de l'eau sanitaire (148) et commander la température d'un espace habitable (28), le système comprenant :
un contrôleur (60) configuré pour :
déterminer une priorité d'eau sanitaire (200) ;
déterminer une priorité de conditionnement d'espace (220 ; 240) ;
comparer la priorité d'eau sanitaire avec la priorité de conditionnement d'espace ; et
diriger l'énergie provenant d'une source d'énergie (32) pour chauffer l'eau sanitaire et/ou conditionner l'espace sur la base des priorités comparées ;
**caractérisé en ce que** le contrôleur est configuré de sorte qu'au moins une de la priorité d'eau sanitaire et de la priorité de conditionnement d'espace soit non binaire lorsqu'il y a des exigences de charge concurrentes entre le chauffage d'eau sanitaire et la commande de température.

13. Système selon la revendication 12, dans lequel :
la détermination de la priorité d'eau sanitaire (200) est basée sur une différence entre une valeur de consigne de température d'eau sanitaire et une première température mesurée (T_{W}) ;
la détermination de la priorité de conditionnement d'espace (220 ; 240) est basée sur une différence entre une valeur de consigne de température d'espace (T_{RSPH} ;
T_{RSPC}) et une seconde température mesurée (T_{R}) .

14. Système selon la revendication 12, dans lequel :
le système comporte la source d'énergie ; et
la source d'énergie comprend un système de compression de vapeur.

15. Système selon la revendication 14, dans lequel le système comprend en outre :
une unité extérieure présentant un premier échangeur de chaleur (42) du système de compression de vapeur ;
une unité intérieure (34) présentant un second échangeur de chaleur (54) du système de compression de vapeur ;
un réservoir de stockage d'eau chaude sanitaire (36) ;
une ou plusieurs sorties d'eau sanitaire (72) couplées au réservoir d'eau chaude sanitaire (36) pour recevoir de l'eau chauffée de celui-ci ;
un réseau de liquide de transfert de chaleur (80) comportant un ou plusieurs terminaux (70) positionnés pour échanger de la chaleur avec l'espace habitable ; et
un système de conduit pour amener sélectivement l'échangeur de chaleur (130) du réservoir (36) ou le réseau (80) à recirculer le transfert de fluide pour la communication avec le second échangeur de chaleur.
